# EUROPÄISCHE PATENTSCHRIFT

(11) **EP 0 408 804 B1**
(45) Veröffentlichungstag und Bekanntmachung des Hinweises auf die Patenterteilung: **10.06.1998**
(21) Anmeldenummer: 89120533.8
(22) Anmeldetag: 06.11.1989
(51) Int. Cl.: G01N 35/00, G01N 33/53

(54) **Analysegerät für heterogene immunologische Tests**
Analyser for heterogeneous immuno assays
Analyseur pour des essais immunologiques hétérogènes

(30) Priorität: 19.07.1989 DE 3923833
(43) Veröffentlichungstag der Anmeldung: 23.01.1991
(73) Patentinhaber: BOEHRINGER MANNHEIM GMBH, 68298 Mannheim (DE)
(72) Erfinder: Hofstetter, Meinrad, CH-7012 Felsberg (CH); Leckebusch, Klaus, CH-7413 Masein (CH); Panzer, Armin, CH-7014 Trin (CH)
(74) Vertreter: Pfeifer, Hans-Peter, Dr., Dr. H.-P. Pfeifer Dr. P. Jany, Patentanwälte

(56) Entgegenhaltungen:
- EP-A- 0 289 789
- DE-A- 3 242 460
- DE-A- 3 402 304
- DE-A- 3 839 080
- US-A- 4 341 736
- PATENT ABSTRACTS OF JAPAN, Band 6, Nr. 104 (P-122)[982], 15. Juni 1982; & JP-A- 57 35 756 (HITACHI) 26-02-1982

## Beschreibung

Die Erfindung betrifft ein Analysegerät für heterogene immunologische Tests.

Immunologische Bestimmungen haben in der medizinischen Analytik eine große Bedeutung. Sie basieren auf der hochspezifischen Bindungsreaktion zwischen immunologischen Bindungspartnern, beispielsweise einem Antigen und dem entsprechenden Antikörper und sind deshalb außerordentlich selektiv und empfindlich.

Die immunologischen Analyseverfahren erfordern sehr häufig eine Trennung zwischen einem gebundenen und einem freien Anteil eines Reaktionsbestandteils. Diese Trennung ("Bound-Free-Trennung", "BF-Trennung") wird bei heterogenen Immuntests dadurch bewirkt, daß ein Bindungspartner auf einem Träger fixiert ist, wobei als Träger vor allem das Reaktionsgefäß selbst (sogenannte "coated tubes") oder Kugeln aus einem inerten Kunststoff verwendet werden. Die BF-Trennung erfordert ein intensives Waschen des Trägers, um sicherzustellen, daß der freie Reaktionspartner vollständig von dem Träger entfernt ist. Ein anderes Charakteristikum heterogener immunologischer Tests sind die durch die heterogene Reaktionsführung bedingten langen Inkubationszeiten.

Geräte zur Durchführung solcher Analysen müssen erheblich schwierigere Anforderungen als konventionelle Analysegeräte erfüllen. Nicht nur Reagenzflüssigkeiten, sondern auch die Träger (coated tubes oder Kugeln) müssen zum richtigen Zeitpunkt am richtigen Ort zur Verfügung stehen. Das Waschen erfordert einen zusätzlichen Arbeitsschritt, der meist mehrfach durchgeführt und in geeigneter Weise in die Geräteorganisation eingebaut werden muß. Die lange und von der jeweiligen Analyse (dem "Test-parameter") abhängige Inkubationszeit erhöht nicht nur die Bearbeitungszeit, sondern verursacht bei Geräten, die mehrere verschiedene Analysen in einem Arbeitsgang automatisch durchführen können (Mehrparameter-Geräte) große organisatorische Probleme, insbesondere wenn ein proben-selektiver Betrieb gewünscht wird, d.h. für eine in einem einzigen Probengefäß befindliche Probe eine beliebige Auswahl von Analysen möglich sein soll. Es ist beispielsweise zweckmäßig, zunächst die Analysereaktionen mit den längsten Inkubationszeiten (bis zu mehrere Stunden) einzuleiten und während der Inkubationszeit die Bearbeitung kürzer laufender Tests einzuschieben. Da auf diese Weise eine Vielzahl von Tests zeitlich ineinander verschachtelt abgearbeitet werden sollen, sind die Anforderungen an die Bearbeitungsorganisation eines entsprechenden Geräts sehr hoch.

Da die manuelle Durchführung immunologischer Tests sehr aufwendig ist, besteht trotz dieser hohen Anforderungen bereits seit langem das Bedürfnis, immunologische Tests möglichst vollständig zu mechanisieren.

Ein Gerät, mit dem eine Vielzahl immunologischer Bestimmungen für verschiedene Parameter vollautomatisch abgearbeitet werden kann, wird von der Anmelderin unter der Bezeichnung "Enzymuntest-System ES 600" angeboten. Das Gerät hat einen stationären Inkubator, in welchem bis zu 600 coated tubes inkubiert werden können. Sie können aus dem Inkubator mit Hilfe eines Antriebs, der in der Funktion einem Portalkran ähnelt, entnommen und nach Bedarf, gesteuert durch ein entsprechendes Steuerungsprogramm, in einen Bearbeitungsrotor transferiert werden. Der Bearbeitungsrotor ist klein und schnell drehbar. Um ihn herum ist stationär eine Waschstation sowie eine Auswerteeinrichtung angeordnet. Stationär ist dabei so zu verstehen, daß die jeweiligen Röhrchen zum Zuführen oder Absaugen von Flüssigkeit, welche im folgenden als Nadeln bezeichnet werden, ausschließlich vertikal beweglich sind, um sie in die Reaktionsgefäße einzutauchen. Für die Proben und Reagenzien sind bei diesem Gerät zwei konzentrische Rotoren vorgesehen. Die Flüssigkeiten werden mit Hilfe einer an einem Arm nicht nur vertikal, sondern auch parallel zur Arbeitsebene des Gerätes beweglichen Transfernadel übertragen. Dieses Gerät ist zwar sehr leistungsfähig, jedoch ist ein sehr großer konstruktiver Aufwand insbesondere für den Transfer der Reaktionsgefäße in den Reaktionsrotor sowie für Antrieb und Steuerung des Reaktionsrotors erforderlich.

In der DE-A 34 02 304 ist ein Gerät beschrieben, bei dem die Reaktionsgefäße in einem Reaktionsrotor angeordnet sind, welcher mit einer gegebenen Teilung intermitierend drehbar ist. Die Reaktionsgefäße sind auf einem Kreis um die Rotorachse in einem Abstand angeordnet, welcher der Schrittweite der Rotorbewegung entspricht. Als Träger für ein trägerfixiertes immunologisches Reagenz dienen Kugeln, welche an einer Trägerzugabestation in die Reaktionsgefäße eingeführt werden. Auch die übrigen Bearbeitungsstationen (Waschstation, Reagenzzufuhrstationen, Auswerteeinrichtung) sind ringsum den Reaktionsrotor angeordnet und stationär. Die Probenzufuhr erfolgt mit Hilfe einer parallel zur Rotorebene beweglichen Transfernadel, wobei die Proben in einem beweglichen Magazin oder in einem Probenrotor vorrätig gehalten werden. Der Reaktionsrotor kann auch drei Reihen von Reaktionsgefäßen haben, wobei jeder Reihe stationäre Wasch- und Reagenzzufuhrstationen zugeordnet sind. Dieses bekannte Gerät erfordert einen vergleichsweise geringen mechanischen Aufwand. Es ist jedoch aus prinzipiellen Gründen wenig flexibel in der Anpassung an eine Vielzahl verschiedener Analysen.

Auch in dem in der DE-A-38 39 080 beschriebenen Gerät sind Rotoren für Reagenzien, Proben und Reaktionsgefäße vorhanden, wobei der Probenrotor und der Reagenzrotor konzentrisch angeordnet sind. Zum Transfer von Probe und Reagenz in die in einer Reihe an der Peripherie des Reaktionsrotors angeordneten Reaktionsgefäße dient eine an einem Schwenkarm horizontal und vertikal bewegliche Flüssigkeitstransfernadel. Das Gerät wird in einem festen Zyklus betrieben, bei dem nacheinander alle Proben und Reagenzien in aufeinanderfolgende Reaktionsgefäßen dosiert werden. Nach einer durch den Gerätetakt und die Position der Bearbeitungsstationen fest vorgegebenen Zeit wird in einer ortsfesten Waschstation die BF-Trennung durchgeführt. Dabei ist keine Anpassung an unterschiedliche Inkubationszeiten der immunologischen Bindungsreaktion vorgesehen.

Das erfindungsgemäße Analysegerät hat drei Rotoren, nämlich einen Probenrotor, einen Reagenzrotor und einen Reaktionsrotor, welche jeweils Aufnahmen für entsprechende Gefäße, also Probengefäße, Reagenzgefäße und Reaktionsgefäße aufweisen. Die Gefäße haben Öffnungen zur Zufuhr bzw. Entnahme von Flüssigkeiten. Die Aufnahmen für die Gefäße sind so angeordnet, daß sich die Öffnungen jeweils auf Kreisen um die Rotorachse befinden. Der Reagenzrotor und der Probenrotor haben jeweils mindestens einen solchen Kreis, bei dem Reaktionsrotor sind mehrere Reihen von Reaktionsgefäßen vorgesehen, deren Öffnungen auf mehreren konzentrischen Kreisen um die Rotorachse angeordnet sind. Die Reaktionsgefäße haben mit einem Bindepartner, wie z.B. Antikörper, Polyhapten oder Streptavidin, beschichtete Innenwände. Mindestens zwei der Rotoren sind konzentrisch zueinander. Die Rotoren sind jeweils in eine Vielzahl von Drehpositionen drehbar, in denen sich mindestens eine der Öffnungen in einer vorbestimmten Position befindet, die zur Zufuhr oder Entnahme von Flüssigkeit dient und deswegen als Liquid Handling-Position (LH-Position) bezeichnet wird.

Zur Übertragung von Flüssigkeiten, insbesondere Probe und Reagenz, dient eine Liquid Handling-Einrichtung (LH-Einrichtung) mit einer zwischen den Rotoren beweglichen Transfernadel. Hierzu dient eine Bewegungseinrichtung, die so ausgebildet ist, daß der Bewegungsweg mindestens eine LH-Position jedes Kreises von Öffnungen auf jedem Rotor derartig kreuzt, daß die Nadel in die jeweilige Öffnung abgesenkt werden kann.

Weiterhin ist eine Wascheinrichtung zum Spülen des Innenraums von in den Reaktionsrotor eingesetzten Reaktionsgefäßen zwecks Trennung von darin befindlichen trägerfixierten Reaktionsbestandteilen von den freien Reaktionsbestandteilen vorgesehen. Eine Auswerteeinrichtung dient dazu, eine für die Analyse charakteristische physikalische Veränderung zu messen. Bevorzugt ist dies die optische Absorption bei einer bestimmten Wellenlänge, jedoch ist die Erfindung nicht auf ein bestimmtes Nachweisprinzip beschränkt, beispielsweise könnte auch Reflexionsphotometrie oder Fluoreszenzmessung verwendet werden.

Durch die Kombination dieser Maßnahmen ergibt sich ein Gerät, welches einerseits verhältnismäßig einfach aufgebaut ist und andererseits in außerordentlich flexibler Weise die Durchführung der verschiedensten heterogenen immunologischen Analysen ermöglicht. Der Raumbedarf ist gering, so daß das Gerät als Tischgerät ausgebildet sein kann. Die kurzen Transportwege ermöglichen einen schnellen Zeittakt der Bearbeitung und damit einen hohen Gerätedurchsatz. Es ist ohne weiteres möglich, sowohl probenselektiv als auch reagenzselektiv zu arbeiten.

Die Waschnadel der Wascheinrichtung ist mittels einer Waschnadel-Bewegungseinrichtung auf einem Bewegungweg beweglich, der jeweils eine LH-Position jedes Kreises von Reaktionsgefäßöffnungen auf dem Reaktionsrotor kreuzt. Dadurch kann eine Wascheinrichtung für die BF-Trennung in sämtlichen Reaktionsgefäßen eingesetzt werden. Der Bewegungsweg der Waschnadel stimmt zumindest teilweise mit dem Bewegungweg der Flüssigkeits-Transfernadel überein, wobei die gleichen LH-Positionen auf dem Reaktionsrotor sowohl vom Bewegungsweg der Transfernadel, als auch dem der Waschnadel gekreut werden. Dies vereinfacht die Konstruktion und ermöglicht es, unmittelbar nacheinander ohne Rotorbewegung Flüssigkeitstransferoperationen und Waschoperationen durchzuführen.

Die Auswerteeinrichtung kann stationär am Umfang des Reaktionsrotors vorgesehen sein.

Zur Auswertung wird Flüssigkeit aus den Reaktionsgefäßen entnommen und die Auswerteeinrichtung weist zu diesem Zweck eine Absaugnadel auf, wobei vorzugsweise auch für die Absaugnadel eine Bewegungseinrichtung vorgesehen ist. Auch ihr Bewegungsweg kreuzt vorzugsweise eine LH-Position jedes Kreises von Reaktiongsgefäßöffnungen auf dem Reaktionsrotor kreuzt. Auch in diesem Fall ist es vorteilhaft, wenn der Bewegungsweg der Absaugnadel mindestens teilweise mit dem Bewegungsweg der Flüssigkeitstransfernadel übereinstimmt.

Die Bewegungseinrichtungen für die Transfernadel, sowie gegebenenfalls für die Waschnadel und die Absaugnadel, können in verschiedener Weise realisiert sein. Beispielsweise kann eine Transportschiene vorgesehen sein, welche zwischen den Rotoren parallel zu deren Oberfläche verläuft. An dieser Schiene können die Nadeln mit Hilfe elektromotorisch angetriebener Läufer hin- und herfahren. Eine andere Möglichkeit wäre die Verwendung von Roboter-Knickarmen, an welchen die Nadeln befestigt sind. Auf überraschend einfache Weise lassen sich die notwendigen Bewegungen mit Hilfe von Schwenkarmen realisieren, wie dies im folgenden näher erläutert wird.

Die Erfindung wird im folgenden anhand eines in den Figuren schematisch dargestellten Ausführungsbeispiels näher erläutert; es zeigen:
- Fig. 1: einen Ausschnitt aus einem Analysegerät in perspektivischer Darstellung;
- Fig. 2: eine Multifunktions-Liquid Handling-Einheit für ein erfindungsgemäßes Analysegerät in perspektivischer Darstellung;
- Fig. 3 - Fig. 5: Aufsichten auf ein erfindungsgemäßes Gerät in Prinzipdarstellung zur Erläuterung des Funktionsablaufes.

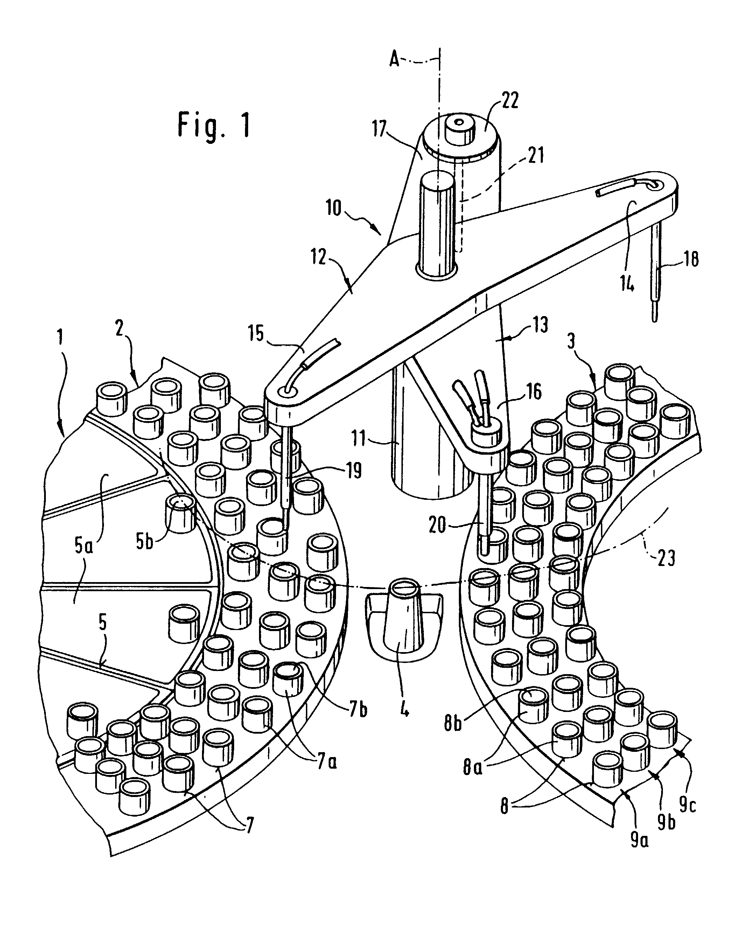

Das in Figur 1 dargestellte Gerät hat einen Reagenzrotor 1, einen Probenrotor 2 und einen Reaktionsrotor 3, wobei der Reagenzrotor und der Probenrotor konzentrisch zueinander angeordnet sind, so daß sie einen Doppelrotor bilden, dessen Rotoren jedoch unabhängig voneinander drehbar sind. Zwischen dem Doppelrotor 1,2 und dem Reaktionsrotor 3 befindet sich ein Waschgefäß 4.

Jeder der Rotoren hat Aufnahmen für Gefäße. Der Reagenzrotor 1 hat vorzugsweise verhältnismäßig große Aufnahmen 5 für eine verhältnismäßig kleine Zahl von Reagenzgefäßen 5a mit Öffnungen 5b.

Der Probenrotor 2 hat zweckmäßigerweise kreisrunde Aufnahmen 7 für Probengefäße, welche im dargestellten Fall auf drei konzentrischen Kreisen angeordnet sind. Sie dienen zur Aufnahme von Probengefäßen 7a mit Öffnungen 7b. Auch die Aufnahmen 8 für die Reaktionsgefäße 8a mit Öffnungen 8b in dem Reaktionsrotor 3 sind zweckmäßigerweise kreisrund und in mehreren Reihen angeordnet.

Im Bereich zwischen den Rotoren befindet sich eine insgesamt mit 10 bezeichnete Multifunktions-Liquid Handling-Einheit (MFLH-Einheit). Sie besteht in der dargestellten bevorzugten Ausführungsform im wesentlichen aus einer Säule 11 und zwei Schwenkträgern 12 und 13 mit jeweils zwei Tragarmen 14, 15 bzw. 16,17.

An den Tragarmen 14, 15 des ersten Schwenkträgers 12 ist jeweils eine Transfernadel 18,19 angebracht. Der zweite Schwenkträger 13 trägt an seinem ersten Tragarm 16 eine Waschnadel 20 und an seinem zweiten Tragarm 17 eine Absaugnadel 21 für ein Photometer, welche in Fig. 1 von dem Tragarm 17 verdeckt und deswegen gestrichelt dargestellt ist. Ein Schwingantrieb 22 dient dazu, die Nadel 21 in Schwingungen zu versetzen, um eine Flüssigkeit, in die sie eingetaucht ist, zu durchmischen.

Die Schwenkachse A der MFLH-Einheit verläuft parallel zu den Drehachsen der Rotoren 1,2,3 und damit senkrecht zur Arbeitsebene des Gerätes, die durch die Rotoren definiert ist. Die Nadeln 18,19,20,21 sind alle im gleichen Abstand von der Achse A befestigt, so daß sich alle auf dem gleichen Schwenkkreis 23 bewegen. Die Nadeln haben daher - bezüglich der Arbeitsebene des Gerätes - den gleichen Bewegungsweg. Auf dem Schwenkkreis 23 liegt auch das Waschgefäß 4.

Die MFLH-Einheit ermöglicht auch das notwendige Anheben- und Absenken der Nadeln 18 - 21 in Richtung senkrecht zur Arbeitsebene. Zu diesem Zweck ist ein für beide Schwenkträger 12,13 getrennter oder - bevorzugt - gemeinsamer Hubantrieb vorgesehen.

Die Rotoren 1,2,3 sind jeweils in eine Vielzahl von Drehpositionen drehbar, in denen sich mindestens eine der Öffnungen 5b,7b,8b der jeweiligen Gefäße 5a,7a,8a in einer Position befindet, die auf dem Schwenkweg der Nadeln 18-21 liegt. In dieser Position, welche als LH-Position bezeichnet wird, kann wahlweise jede der Nadeln 18-21 in die jeweiligen Öffnungen abgesenkt werden, um Flüssigkeit zu entnehmen, zuzuführen etc. - allgemein also um Liquid Handling-Operationen durchzuführen.

Um möglichst kurze Bewegungswege der Bewegungseinrichtung für die verschiedenen Nadeln zu ermöglichen ist es zweckmäßig, wenn, wie dargestellt, der Reaktionsrotor radial auswärts von dem Doppelrotor 1,2 angeordnet ist. Im dargestellten Ausführungsbeispiel ist seine Rotationsachse von der des Doppelrotors verschieden. Es kann aber auch zweckmäßig sein, alle drei Rotoren konzentrisch, also mit einer gemeinsamen Rotationsachse auszubilden.

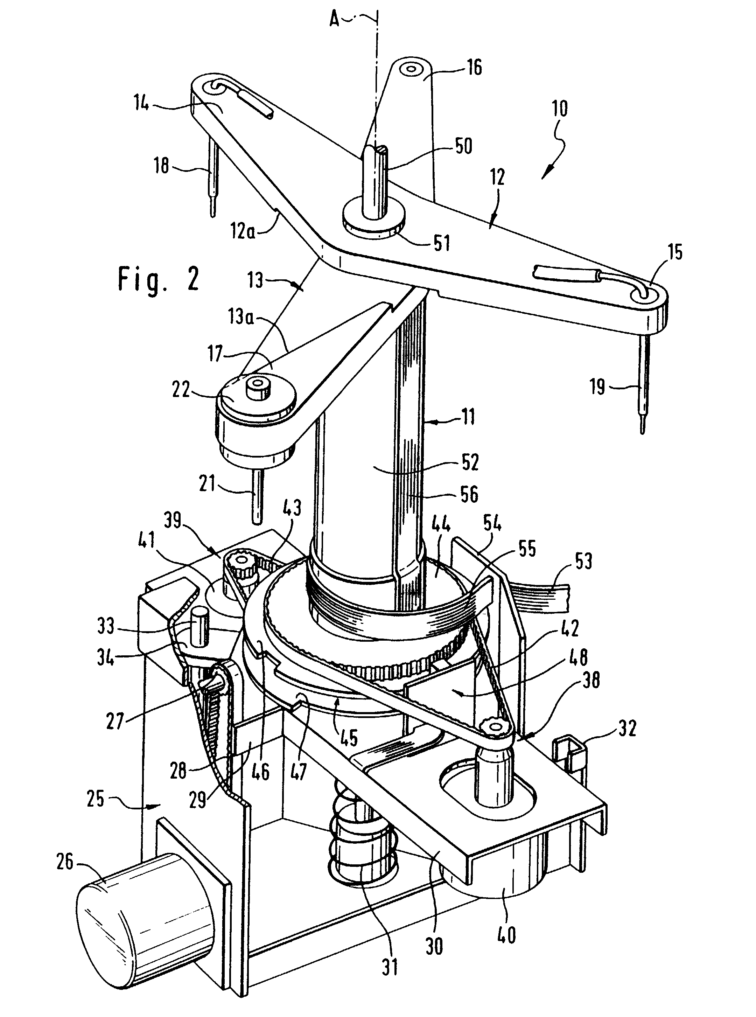

Die Schwenkträger 12,13 haben vorzugsweise getrennte Drehantriebe und einen gemeinsamen Hubantrieb. Ein Beispiel ist in Fig. 2 näher dargestellt ist.

Der insgesamt mit 25 bezeichnete Hubantrieb hat einen Schrittmotor 26 und eine über eine Rolle 27 umgelenkten Zahnriemen 28. Der Zahnriemen 28 ist über ein Verbindungsstück 29 mit einem gemeinsamen Tragrahmen 30 der Drehantriebe verbunden, der insgesamt angehoben und abgesenkt wird. Zum Massenausgleich ist eine Druckfeder 31 vorgesehen. Die Vertikalbewegung wird mit einer bei 32 angedeuteten Lichtschranken-Überwachungseinrichtung überwacht, so daß die Höhe des Tragrahmens 30 und damit der Schwenkträger 12,13 unabhängig vom Antriebsspiel exakt eingestellt werden kann.

Eine Führungsstange 33 und ein Pendellager 34 bilden eine Drehmomentstütze, durch die ein Verdrehen des Tragrahmens 30 verhindert wird.

Die Drehantriebe 38, 39 weisen jeweils einen Schrittmotor 40 bzw. 41 und einen Zahnriemen 42, 43 auf. Die Zahnriemen laufen abtriebsseitig auf zwei Zahnriemenrädern 44, 45, mit denen jeweils eine Codescheibe 46, 47 verbunden ist. Eine Lichtschrankeneinheit 48 dient dazu, die Drehbewegung der beiden Codescheiben und damit der Schwenkträger 12 und 13 zu überwachen, so daß auch die Drehposition der Arme unabhängig vom Spiel des Antriebs sehr präzise eingestellt werden kann.

Die Säule 11 besteht im einzelnen aus einer Führungssäule 50, einem inneren Schwenkantriebsrohr 51, welches die Verbindung zwischen dem Drehantrieb 39 und dem ersten Schwenkträger 12 herstellt und einem äußeren Schwenkantriebsrohr 52, welches die Verbindung zwischen dem Schwenkantrieb 38 und dem zweiten Schwenkträger 13 bildet.

Selbstverständlich müssen die elektrischen und hydraulischen Verbindungen zu den Nadeln an den Enden der Tragarme so geführt sein, daß sie der Schwenkbewegung folgen können, ohne beschädigt zu werden. Die elektrische Verbindung kann beispielsweise, wie dargestellt, mit Hilfe eines ersten Flachbandkabels 53, einer Verbindungsplatine 54 und eines zweiten Flachbandkabels 55, welches in einen am äußeren Schwenkrohr befestigten Abschnitt 56 übergeht, erfolgen. Die daran anschließenden Verbindungsrähte zu den Nadeln 18 - 21 sind der Übersichtlichkeit halber nicht dargestellt.

Die hydraulischen Leitungen sind der Übersichtlichkeit halber ebenfalls nur andeutungsweise dargestellt. Die Drehbewegung läßt sich beispielsweise dadurch ausgleichen, daß die Schläuche innerhalb des Schwenkantriebsrohres 51 spiralförmig verlaufen.
Die Schwenkbewegung der Schwenkträger 12,13 wird insgesamt durch einen nicht dargestellten Anschlag auf weniger als 360° begrenzt. Außerdem sind an den Trägern jeweils Anschlagflächen 12a,13a vorgesehen, die die Relativbewegung der Schwenkträger zueinander begrenzen.

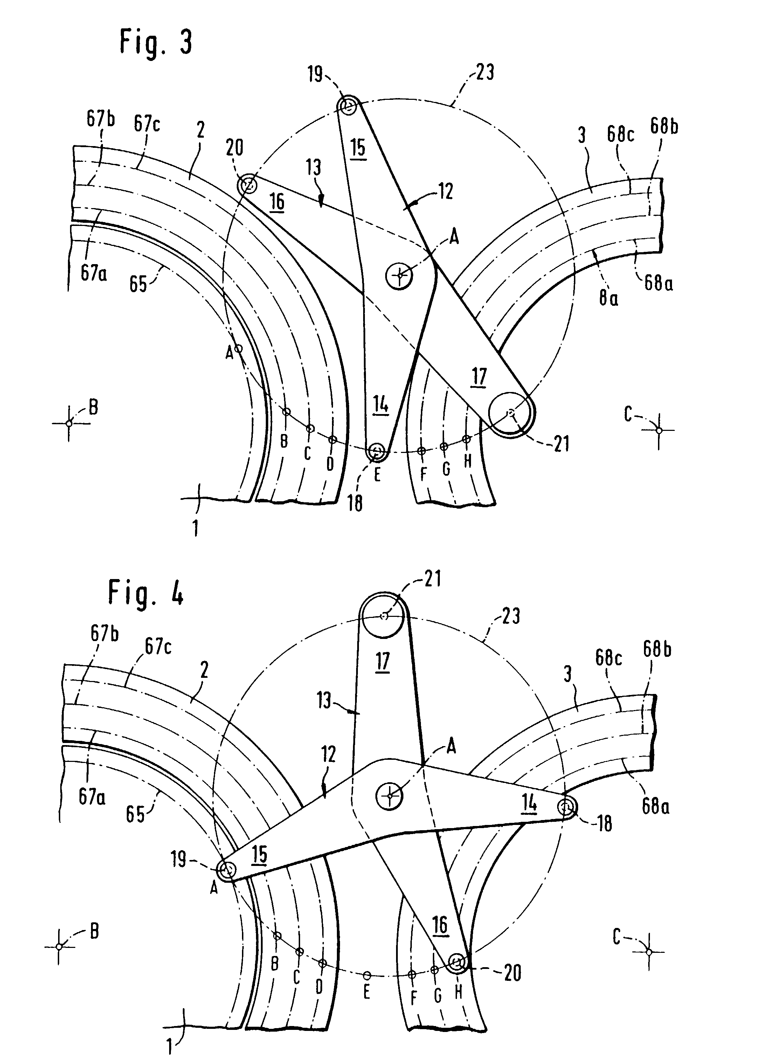

Die Funktion des Analysegerätes wird im folgenden anhand der Figuren 3 - 5 näher erläutert. Diese zeigen in einer stark schematisierten Aufsicht den Reagenzrotor 1, den Probenrotor 2, den Reaktionsrotor 3 und die Schwenkträger 12 und 13.

Die hier nicht dargestellten Öffnungen der Reagenzgefäße sind auf einem strichpunktiert gezeichnetem Kreis 65 um die gemeinsame Achse B des Reagenzrotors 1 und des Probenrotors 2 angeordnet. Die Öffnungen der Probengefäße verlaufen auf Kreisen 67a, 67b, 67c um die Achse B. Entsprechend befinden sich die Öffnungen der drei Reaktionsgefäßreihen auf Kreisen 68a, 68b, 68c um die Achse C des Reaktionsrotors 3. Die LH-Positionen der Rotoren sind mit A,B,C,D,F,G,H bezeichnet. Die Position des Waschgefäßes trägt das Bezugszeichen E.

In diesem Zusammenhang sei darauf hingewiesen, daß die Aufnahmen 7 bzw. 8 auf Rotoren, welche mehrere, auf konzentrischen Kreisen liegende Reihen aufweisen, nicht notwendigerweise - wie in Fig. 1 dargestellt - so angeordnet sein müssen, daß in einer einzigen Drehposition des Rotors jeweils eine Gefäßöffnung jeder Reihe auf dem Bewegungsweg 23 liegt. Vielmehr genügt es, wenn jeweils die Öffnung desjenigen Gefäßes, an dem eine Liquid Handling-Operation durchgeführt werden soll, in die entsprechende LH-Position gebracht werden kann.

Die Funktionsweise des Gerätes wird im folgenden anhand eines Zwei-Schritt-Sandwich-Test zur Bestimmung eines Antigens Ag aus der Probe beschrieben, welcher folgende Schritte umfaßt:
a) Es wird ein Reaktionsgefäß im Reaktionsrotor 3 vorgelegt, welches einen für Ag spezifischen Antikörper Ak in trägergebundener Form (Akb) aufweist. Üblich ist beispielsweise ein coated tube, an dessen Innenwand der Antikörper gebunden ist.
b) Das Reaktionsgefäß wird mit einer bestimmten Menge an Probe und Reagenz gefüllt.
c) Danach läßt man die spezifische Bindungsreaktion zwischen dem Ag aus der Probe und dem Akb ablaufen, bei der sich trägergebundene Komplexe Akb-Ag bilden. Dies erfordert vielfach einen längeren Zeitraum, so daß mittlerweile von dem Gerät Arbeitsschritte anderer Parameter abgearbeitet werden.
d) Danach wird abgesaugt und gründlich gewaschen (BF-Trennung).
e) Es wird Konjugat eines weiteren für das Antigen spezifischen Antikörpers mit einem Markierungsenzym (AkE) zugegeben.
f) Erneute Inkubation zur Bildung von Sandwich-Komplexen Akb-Ag-AkE.
g) Erneutes Absaugen und Waschen; dadurch wird überschüssiges AkE von der gebundenen Phase getrennt (BF-Trennung).
h) Zugabe eines farbbildenden Substrats, dessen Farbumschlag für die Konzentration des Markierungsenzyms E charakteristisch ist.
i) Mischung, Absaugung und Photometrierung.

Dieser Testablauf ist aus der Literatur bekannt und muß deswegen nicht im einzelnen beschrieben werden. Daneben gibt es zahlreiche andere Testprozeduren für heterogene immunologische Bestimmungen. Ein besonderer Vorteil des vorliegenden Gerätes besteht darin, daß es mit einfachen Mitteln die Durchführung zahlreicher verschiedener immunologischer Testprinzipien erlaubt.

Die einzelnen Schritte eines Zwei-Schritt-Sandwichtest werden von dem erfindungsgemäßen Gerät wie folgt ausgeführt:
a) Entsprechend der Zahl der durchzuführenden Analysen werden die benötigten Reaktionsgefäße (coated tubes) in die Aufnahmen des Rotors 3 eingefüllt. Dabei ist es zweckmäßig, wenn die Reaktionsgefäße zu einem bestimmten Test blockweise dicht beieinander angeordnet sind, so daß die einzelnen Schritte jeweils für sämtliche Reaktionsgefäße eines bestimmten Tests hintereinander (batch-weise) durchgeführt werden können. Dies wird beim vorliegenden Gerät dadurch erleichtert, daß sämtliche Bearbeitungsfunktionen an den gleichen LH-Positionen F,G,H durchgeführt werden und der Bewegungsweg der Waschnadel 20 und der Absaugnadel 21 mit dem der Flüssigkeitstransfernadeln 18,19 übereinstimmt, so daß sie die Reaktionsgefäßreihen an den gleichen LH-Positionen F,G,H kreuzen.
b) Danach wird mit Hilfe der ersten Flüssigkeitstransfernadel 18 zunächst in der LH-Position A Reagenz und in einer der Positionen B, C oder D Probe angesaugt. Nach der Reagenz- und nach der Probeaufnahme wird jeweils in Position E die Transfernadel 18 außen gewaschen. Probe und Reagenz werden in einer der Positionen F, G oder H in das entsprechende Reaktionsgefäß ausgestoßen. Dabei befindet sich zweckmäßigerweise der zweite Schwenkträger 13 in der in Fig. 3 dargestellten Parkposition, während der erste Schwenkträger 12 den Bewegungsweg von A bis F, G oder H abfährt. Soweit - wie bei der dargestellten bevorzugten Ausführungsform - der Hubantrieb für beide Schwenkträger gemeinsam ist, muß sich der momentan nicht benutzte zweite Schwenkträger in einer Position befinden, in der seine Nadeln beim Absenken nirgends anstoßen können und in keine der Gefäßöffnungen eindringen. Eine solche Position ist in Fig. 3 dargestellt.
c) Während der Inkubation wird der Rotor 3 zweckmäßigerweise in eine andere Position gebracht, bei der ein anderer Block von Reaktionsgefäßen sich im Bereich der LH-Positionen F,G,H befindet und bearbeitet werden kann.

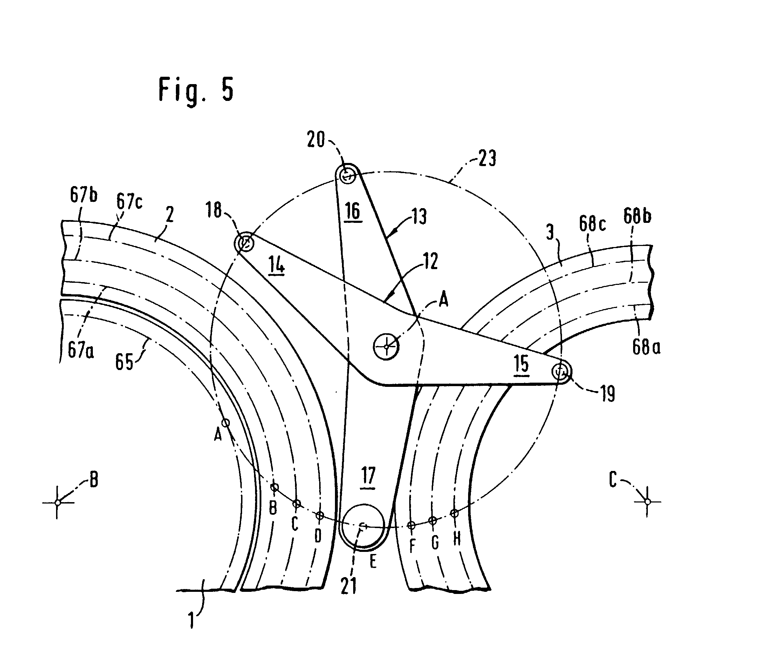

d) Fig. 4 zeigt das Gerät in einem Betriebszustand, bei dem die an dem Tragarm 16 befindliche Waschnadel 20 in ein in der LH-Position H befindliches Reaktionsgefäß abgesenkt ist, um dieses zu waschen. Geeignete Konstruktionen für die Waschnadel sind bekannt. Beispielsweise kann sie als Doppelrohr ausgebildet sein, wobei durch das eine Rohr Waschflüssigkeit in das Reaktionsgefäß gesprüht und durch das andere Rohr abgesaugt wird.
e) Die anschließende Zugabe von Konjugat könnte prinzipiell mit Hilfe der gleichen Flüssigkeitstransfernadel 18 erfolgen, mit der Probe und Reagenz in Schritt b dosiert wurden, wobei zur Vermeidung von Verschleppungen jeweils in der Position E gewaschen werden muß. Soweit gemäß der dargestellten bevorzugten Ausführungsform die Waschnadel 20 und die Absaugnadel 21 an einem gemeinsamen Schwenkträger 13 befestigt sind und der Bewegungsweg der Flüssigkeitstransfernadel 18 im Bereich der LH-Positionen F,G,H mit dem der Waschnadel 20 und Absaugnadel 21 übereinstimmt, kann die Flüssigkeitstransfernadel 18 nicht ohne weiteres an der Waschnadel vorbegeführt werden. Hierbei ist es zweckmäßig, wenn, wie dargestellt, an dem ersten Schwenkträger 12 ein zweiter Tragarm 15 mit einer zweiten Flüssigkeitstransfernadel 19 vorgesehen ist. Dadurch ist es möglich, das Konjugat während der Waschung aus dem entsprechenden Reaktionsgefäß an der LH-Position A anzusaugen und danach in die entsprechende LH-Position des Reaktionsrotors F,G,H zu transferieren.
f) Während der folgenden Inkubation kann analog zum Schritt c) ein anderer Block von Reaktionsgefäßen bearbeitet werden.
g) und h) Die Bound-Free-Trennung und die Zudosierung des Substrats erfolgen analog zu den Schritten d) und e) mit Hilfe der Waschnadel 20 und der zweiten Flüssigkeitstransfernadel 19.
i) Fig. 5 zeigt, daß der erste Schwenkträger 12 während der Photometrierungsphase ähnlich wie der zweite Schwenkträger 13 während der Probendosierung (Schritt b, Fig. 3) eine Parkposition einnimmt, bei der die Flüssigkeitstransfernadeln 18, 19 während der notwendigen Hubbewegungen nicht anstoßen. Der zweite Schwenkträger ist in einer Position gezeigt, bei der sich die Ansaugnadel 21 über der Waschposition E befindet. Von hier kann sie zum Absaugen und Photometrieren je nach Bedarf in eine der LH-Position F, G oder H gebracht werden.

Die dargestellte Ausführungsform, bei der sich jeweils zwei Nadeln an zwei Tragarmen befinden, ist konstruktiv besonders einfach und erlaubt eine schnelle und rationelle Durchführung vieler verschiedener immunologischer Analysen. In diesem Fall sollten die Winkel zwischen den Tragarmen 14,15 bzw. 16,17 der einzelnen Schwenkträger 12 und 13 größer als 90°, vorzugsweise größer als 120° sein, um die geschilderten Betriebsweisen zu ermöglichen. Es können jedoch auch getrennte Bewegungseinrichtungen für eine oder mehrere Flüssigkeitstransfernadeln, eine Waschnadel und eine Absaugnadel vorgesehen sein. Geeignet wäre beispielsweise je ein einarmiger Schwenkträger, wobei die Schwenkträger verschieden lang sein können und um verschiedene oder (vorzugsweise) um die gleiche Schwenkachse schwenkbar sind.

Es ist auch nicht Bedingung, daß ein Kreis von Gefäßöffnungen nur eine einzige LH-Position aufweist. Im dargestellten Fall wäre es beispielsweise naheliegend, weitere LH-Positionen jeweils dort vorzusehen, wo der Kreis 23 die Kreise 67 a-c und 68 a-c ein zweites Mal kreuzt. Dies ist jedoch weniger bevorzugt, weil sehr komplizierte Rotorbewegungen notwendig würden, um die einzelnen Reaktionen im korrekten zeitlichen Ablauf durchzuführen. Dies würde einen großen Aufwand für die Gerätesteuerung (welche zweckmäßigerweise mit Hilfe eines Mikroprozessors erfolgt) erfordern.

## Patentansprüche

1. Analysegerät zur Durchführung heterogener immunologischer Tests umfassend
drei Rotoren mit Aufnahmen für Gefäße, wobei mindestens zwei der Rotoren (1,2) konzentrisch zueinander
angeordnet sind und die Rotoren (1,2,3) in unterschiedliche Drehpositionen drehbar sind, in denen sich jeweils eine der Öffnungen der Gefäße in einer vorbestimmten Liquid Handling-Position (LH-Position) befindet, ein erster Rotor ein Reagenzrotor (1) mit Aufnahmen (5) für Reagenzgefäße (5a) ist, deren Öffnungen (5b) auf einem Kreis (65) um dessen Rotorachse (B) angeordnet sind und ein zweiter Rotor ein Probenrotor (2) mit Aufnahmen (7) für Probengefäße (7a) ist, deren Öffnungen (7b) auf einem Kreis um dessen Rotorachse (B) angeordnet sind,
einen Inkubator, der Aufnahmen für Reaktionsgefäße aufweist,
eine Liquid Handling-Einrichtung (10, LH-Einrichtung) mit einer Transfernadel (18), welche mittels einer Transfernadel-Bewegungseinrichtung (14,25,39) beweglich ist, wobei die Bewegungseinrichtung so ausgebildet ist, daß der Bewegungsweg (23) der Transfernadel (18) mindestens eine LH-Position der Öffnungen auf jedem der drei Rotoren kreuzt,
eine Wascheinrichtung mit einer Waschnadel (20) zum Spülen des Innenraums der Reaktionsgefäße und
eine Auswerteeinrichtung zum Nachweis einer für die Analyse charakteristischen physikalischen Veränderung, die eine Absaugnadel aufweist, um aus jeweils einem Reaktionsgefäß Flüssigkeit zur Auswertung zu entnehmen,
**dadurch gekennzeichnet, daß**
der dritte Rotor ein zugleich als Inkubator dienender drehbarer Reaktionsrotor (3) ist, der mehrere Reihen von Aufnahmen (8) für Reaktionsgefäße (8a) aufweist, deren Öffnungen auf konzentrischen Kreisen um dessen Rotorachse (C) angeordnet sind,
der Bewegungsweg (23) der Transfernadel (18) LH-Positionen (F bis H) der Öffnungen (8b) der Reaktionsgefäße (8a) in jeder der Reihen (9a,9b,9c) von Aufnahmen (8) auf dem Reaktionsrotor (3) kreuzt,
die Wascheinrichtung zum Spülen von einzelnen Reaktionsgefäßen (8a) in jeder der Reihen (9a,9b,9c) von Aufnahmen (8) auf dem Reaktionsrotor (3) ausgebildet ist,
der Bewegungsweg (23) der Waschnadel (20) mindestens teilweise mit dem Bewegungsweg der Transfernadel übereinstimmt, so daß von der Waschnadel und der Transfernadel gleiche LH-Positionen auf dem Reaktionsrotor gekreuzt werden und aufeinanderfolgende Operationen von Waschnadel und Transfernadel ohne Bewegung des Reaktionsrotors durchgeführt werden können und
die Auswerteeinrichtung zur Entnahme von Flüssigkeit aus einzelnen Reaktionsgefäßen (8a) in jeder der Reihen (9a,9b,9c) von Aufnahmen (8) auf dem Reaktionsrotor ausgebildet ist.

2. Analysegerät nach Anspruch 1, **dadurch gekennzeichnet**, daß die Absaugnadel (21) der Auswerteeinrichtung mittels einer Absaugnadel-Bewegungseinrichtung (17,35,38) beweglich ist, wobei ihr Bewegungsweg jeweils eine LH-Position (F,G,H) jedes Kreises (9a-9c) von Reaktionsgefäßöffnungen (8b) auf dem Reaktionsrotor kreuzt.

3. Analysegerät nach Anspruch 2, **dadurch gekennzeichnet**, daß der Bewegungsweg (23) der Absaugnadel (21) mindestens teilweise mit dem Bewegungsweg der Flüssigkeitstransfernadel übereinstimmt.

4. Analysegerät nach Anspruch 2 oder 3, **dadurch gekennzeichnet**, daß die Absaugnadel (21) mittels Schwingantrieb (22) in Schwingungen versetzt werden kann.

5. Analysegerät nach einem der vorhergehenden Ansprüche, **dadurch gekennzeichnet,** daß der Probenrotor (1) und der Reagenzrotor (2) konzentrisch zueinander angeordnet sind und einen Doppelrotor bilden.

6. Analysegerät nach Anspruch 5, **dadurch gekennzeichnet**, daß der Reaktionsrotor (3) radial auswärts von dem aus Probenrotor und Reagenzrotor bestehenden Doppelrotor angeordnet ist.

7. Analysegerät nach einem der vorhergehenden Ansprüche, **dadurch gekennzeichnet,** daß in einer Transfernadel-waschposition (E)ein Waschgefäß (4) für die Transfernadel (18) vorgesehen ist und der Bewegungsweg (23) der Transfernadel (18) die Transfernadelwaschposition kreuzt.

8. Analysegerät nach einem der Ansprüche 5 bis 7, **dadurch gekennzeichnet,** daß die Transfernadel-Waschposition (E) zwischen dem Doppelrotor und dem Reaktionsrotor angeordnet ist.

9. Analysegerät nach einem der vorhergehenden Ansprüche, **dadurch gekennzeichnet,** daß
die Transfernadel-Bewegungseinrichtung einen ersten mittels eines ersten Schwenkantriebs (39) schwenkbaren Schwenkträger (12) aufweist, an dem die Transfernadel befestigt ist,
die Waschnadel-Bewegungseinrichtung einen zweiten mittels eines zweiten Schwenkantriebs (38) schwenkbaren Schwenkträger (13) aufweist, an dem die Waschnadel (20) befestigt ist,
beide Schwenkträger (12,13) unabhängig voneinander um eine gemeinsame Achse (A) schwenkbar sind und
ein Hubmechanismus (25) vorgesehen ist, um die Schwenkträger (12,13) in Richtung der Schwenkachse (A) zu heben und zu senken.

10. Analysegerät nach Anspruch 9, **dadurch gekennzeichnet**, daß der Hubantrieb (25) für beide Schwenkträger (12,13) gemeinsam ist.

11. Analysegerät nach Anspruch 9 oder 10, **dadurch gekennzeichnet**, daß der zweite Schwenkträger (13) zwei sich von der Achse in verschiedene Richtungen radial erstreckenden Tragarme (16,17) aufweist, wobei an dem einem Tragarm (16) die Waschnadel (20) und an dem anderen Tragarm (17) die Absaugnadel (21) der Auswerteeinrichtung befestigt ist.

12. Analysegerät nach Anspruch 9 oder 10, **dadurch gekennzeichnet**, daß der erste Schwenkträger (12) zwei sich von der Achse in verschiedenen Richtungen radial erstreckenden Tragarme (14,15) aufweist, wobei an jedem Tragarm eine Transfernadel (18,19) befestigt ist.

13. Analysegerät nach einem der Ansprüche 11 oder 12, **dadurch gekennzeichnet,** daß der Winkel zwischen den Tragarmen (14,15; 16,17) der Schwenkträger (12,13) größer als 90°, vorzugsweise größer als 120° ist.

## Claims

1. Analyser unit for performing heterogeneous immunological tests, comprising
three rotors with seats for vessels wherein at least two of the rotors (1,2) are arranged concentrically to one another and the rotors (1,2,3) are rotatable in different rotating positions in which in each case one of the openings of the vessels is located in a predetermined liquid handling position (LH position) and wherein a first rotor is a reagent rotor (1) with seats (5) for reagent vessels (5a) the openings (5b) of which are arranged in a circle (65) about its rotor axis (B), and a second rotor is a sample rotor (2) with seats (7) for sample vessels (7a) the openings (7b) of which are arranged in a circle about its rotor axis (B),
an incubator comprising seats for reaction vessels,
a liquid handling unit (10, LH unit) with a transfer needle (18) which is movable by means of a transfer needle moving apparatus (14,25,39), wherein the moving apparatus is so designed that the movement path (23) of the transfer needle (18) crosses at least one LH position of the openings on each of the three rotors,
a washing unit with a washing needle (20) for flushing out the inside of the reaction vessels and
an evaluation device for measuring a physical change characteristic of the analysis which evaluating
device comprises a suction needle for sampling liquid from a reaction vessel for evaluation
characterized in that
the third rotor is a turnable reaction rotor (3) serving at the same time as an incubator and having several rows of seats (8) for reaction vessels (8a) the openings of which are arranged in concentric circles about its rotor axis (C),
the movement path (23) of the transfer needle (18) crosses LH positions (F to H) of the openings (8b) of the reaction vessels (8a) in each of the rows (9a, 9b, 9c) of seats (8) on the reaction rotor (3),
the wasing unit is designed for flushing of individual reaction vessels (8a) in each of the rows (9a, 9b, 9c) of seats (8) on the reaction rotor (3),
the movement path (23) of the washing needle (20) coincides at least partially with the movement path of the transfer needle so that the washing needle and the transfer needle crosses the same LH positions on the reaction rotor and successive operations of washing needle and transfer needle can be carried out without movement of the reaction rotor and
the evaluation device is designed for sampling liquid from individual reaction vessels (8a) in each of the rows (9a, 9b, 9c) of seats (8) on the reaction rotor.

2. Analyser unit according to claim 1, characterised in that the suction needle (21) of the evaluating device is movable by means of a suction needle moving apparatus (17, 35, 38) wherein its movement path crosses in each case an LH position (F, G, H) of each circle (9a-9c) of reaction vessel openings (8b) on the reaction rotor.

3. Analyser unit according to claim 2, characterised in that the movement path (23) of the suction needle (21) coincides at least partially with the movement path of the liquid transfer needle.

4. Analyser unit according to claim 2 or 3, characterised in that the suction needle (21) can be set to vibrate by means of a vibration drive (22).

5. Analyser unit according to any one of the foregoing claims, characterised in that the sample rotor (1) and the reagent rotor (2) are arranged concentrically to one another and form a double rotor.

6. Analyser unit according to claim 5, characterised in that the reaction rotor (3) is arranged radially outwards from the double rotor consisting of the sample rotor and reagent rotor.

7. Analyser unit according to any one of the foregoing claims, characterised in that in a transfer needle washing position (E) a washing vessel (4) is provided for the transfer needle (18) and the movement path (23) of the transfer needle (18) crosses the transfer needle washing position.

8. Analyser unit according to any one of claims 5 to 7, characterised in that the transfer needle washing position (E) is arranged between the double rotor and the reaction rotor.

9. Analyser unit according to any one of the foregoing claims, characterised in that
the transfer needle moving apparatus comprises a first swivelling carrier (12) capable of being swivelled by means of a first swivel drive (39) and to which the transfer needle is fixed,
the washing needle moving apparatus comprises a second swivelling carrier (13) capable of being swivelled by means of a second swivel drive (38) and to which the washing needle (20) is fixed,
both swivelling carriers (12, 13) are capable of being swivelled independently of one another about a common axis (A) and
a lift mechanism (25) is provided for lifting and lowering the swivelling carriers (12, 13) in the direction of the swivelling axis (A).

10. Analyser unit according to claim 9, characterised in that the lift drive (25) is common to both swivelling carriers (12, 13).

11. Analyser unit according to claim 9 or 10,
characterised in that the second swivelling carrier (13) comprises two carrying arms (16, 17) extending radially from the axis in different directions, there being fixed to the one carrying arm (16) the washing needle (20) and to the other carrying arm (17) the suction needle (21) of the evaluating device.

12. Analyser unit according to claim 9 or 10,
characterised in that the first swivelling carrier (12) comprises two carrying arms (14, 15) extending radially from the axis in different directions, to each of which a transfer needle (18, 19) is fixed.

13. Analyser unit according to any one of claims 11 or 12, characterised in that the angle between the carrying arms (14, 15; 16, 17) of the swivelling carriers (12, 13) is greater than 90°, preferably greater than 120°.

## Revendications

1. Analyseur pour la réalisation d'essais immunologiques hétérogènes, comprenant
trois rotors avec des logements pour des récipients, au moins deux des rotors (1, 2) étant disposés de façon concentrique l'un par rapport à l'autre et les rotors (1, 2, 3) pouvant être tournés dans différentes positions de rotation, dans lesquelles respectivement une des ouvertures des récipients se trouve en une position de manipulation de liquides (position LH) prédéterminée, un premier rotor étant un rotor de réactifs (1) avec des logements (5) pour les récipients de réactifs (5a), dont les ouvertures (5b) sont disposées le long d'un cercle (65) autour de son axe de rotor (B) et un deuxième rotor étant un rotor d'échantillons (2) avec des logements (7) pour les récipients d'échantillons (7a), dont les ouvertures (7b) sont disposées le long d'un cercle autour de son axe de rotor (B),
un incubateur, qui présente des logements pour les récipients de réaction,
un dispositif de manipulation de liquides (10, dispositif LH) avec une aiguille de transfert (18), qui est mobile grâce à un dispositif de déplacement de l'aiguille de transfert (14, 25, 39), le dispositif de déplacement étant conçu de telle manière que le parcours de déplacement (23) de l'aiguille de transfert (18) croise au moins une position LH des ouvertures sur chacun des trois rotors,
un dispositif de lavage avec une aiguille de lavage (20) pour le rinçage de l'intérieur des récipients de réaction et
un dispositif d'évaluation pour mettre en évidence une modification physique, caractéristique pour l'analyse, dispositif qui présente une aiguille de prélèvement, pour prélever du liquide respectivement d'un des récipients de réaction en vue de l'évaluation,
caractérisé en ce que
le troisième rotor est un rotor de réaction (3) rotatif servant simultanément d'incubateur, rotor qui présente plusieurs rangées de logement (8) pour les récipients de réaction (8a), dont les ouvertures sont disposées le long de cercles concentriques autour de son axe de rotor (C),
le parcours de déplacement (23) de l'aiguille de transfert (18) croise des positions LH (F à H), des ouvertures (8b) des récipients de réaction (8a) dans chacune des rangées (9a, 9b, 9c) des logements (8) sur le rotor de réaction (3),
le dispositif de lavage pour le rinçage des récipients de réaction (8a) individuels est formé dans chacune des rangées (9a, 9b, 9c) des logements (8) sur le rotor de réaction (3),
le parcours de déplacement (23) de l'aiguille de lavage (20) coïncide du moins partiellement avec le parcours de déplacement de l'aiguille de transfert, de telle manière que l'aiguille de lavage et l'aiguille de transfert croisent des positions LH identiques sur le rotor de réaction et que des opérations successives de l'aiguille de lavage et de l'aiguille de transfert peuvent être réalisées sans déplacement du rotor de réaction et
le dispositif d'évaluation pour le prélèvement de liquide des récipients de réaction (8a) individuels est formé dans chaque rangée (9a, 9b, 9c) des logements (8) sur le rotor de réaction.

2. Analyseur selon la revendication 1, caractérisé en ce que l'aiguille de prélèvement (21) du dispositif d'évaluation est mobile grâce à un dispositif de déplacement de l'aiguille de prélèvement (17, 35, 38), son parcours de déplacement croisant respectivement une position LH (F, G, H) de chaque cercle (9a - 9c) d'ouvertures de récipients de réaction (8b) sur le rotor de réaction.

3. Analyseur selon la revendication 2, caractérisé en ce que le parcours de déplacement (23) de l'aiguille de prélèvement (21) coïncide du moins partiellement avec le parcours de déplacement de l'aiguille de transfert de liquide.

4. Analyseur selon la revendication 2 ou 3, caractérisé en ce que l'aiguille de prélèvement (21) peut être mise à osciller au moyen d'un moteur d'oscillation (22).

5. Analyseur selon l'une des revendications précédentes, caractérisé en ce que le rotor d'échantillons (1) et le rotor de réactifs (2) sont disposés de manière concentrique l'un par rapport à l'autre et forment un rotor double.

6. Analyseur selon la revendication 5, caractérisé en ce que le rotor de réaction (3) est disposé radialement à l'extérieur du rotor double constitué du rotor d'échantillons et du rotor de réactifs.

7. Analyseur selon l'une des revendications précédentes, caractérisé en ce que, dans une position de lavage de l'aiguille de transfert (E), est prévu un récipient de lavage (4) pour l'aiguille de transfert (18) et en ce que le parcours de déplacement (23) de l'aiguille de transfert (18) croise la position de lavage de l'aiguille de transfert.

8. Analyseur selon l'une des revendications 5 à 7, caractérisé en ce que la position de lavage de l'aiguille de transfert (E) est disposée entre le rotor double et le rotor de réaction.

9. Analyseur selon l'une des revendications précédentes, caractérisé en ce que
le dispositif de déplacement de l'aiguille de transfert présente un premier support pivotant (12) pouvant être pivoté grâce à un premier moteur de pivotement (39), support sur lequel est fixée l'aiguille de transfert,
le dispositif de déplacement de l'aiguille de lavage présente un deuxième support pivotant (13) pouvant être pivoté grâce à un deuxième moteur de pivotement (38), support sur lequel est fixée l'aiguille de lavage (20),
les deux supports pivotants (12, 13) pouvant être pivotés indépendamment l'un de l'autre autour d'un axe commun (A) et
un mécanisme élévateur (25) est prévu pour lever et baisser les supports pivotants (12, 13) dans la direction de l'axe pivotant (A).

10. Analyseur selon la revendication 9, caractérisé en ce que le moteur élévateur (25) est commun aux deux supports pivotants (12, 13).

11. Analyseur selon la revendication 9 ou 10, caractérisé en ce que le deuxième support pivotant (13) présente deux bras de support (16, 17) s'étendant radialement à partir de l'axe dans des directions différentes, l'aiguille de lavage (20) étant fixée sur un des bras de support (16) et l'aiguille de prélèvement (21) du dispositif d'évaluation étant fixée sur l'autre bras de support (17).

12. Analyseur selon la revendication 9 ou 10, caractérisé en ce que le premier support pivotant (12) présente deux bras de support (14, 15) s'étendant radialement à partir de l'axe dans des directions différentes, sur chaque bras de support étant fixé une aiguille de transfert (18, 19).

13. Analyseur selon l'une des revendications 11 ou 12, caractérisé en ce que l'angle entre les bras de support (14, 15 ; 16, 17) des supports pivotants (12, 13) est supérieur à 90 °, de préférence supérieur à 120 °.
